# FASCICULE DE BREVET EUROPEEN

(11) **EP 1 279 336 B1**
(45) Date de publication et mention de la délivrance du brevet: **13.09.2006**
(21) Numéro de dépôt: 02291818.9
(22) Date de dépôt: 18.07.2002
(51) Int. Cl.: A22C 7/00

(54) **Plateau de moulage de produits alimentaires**
Plateau zur Formgebung von Nahrungsprodukten
Plateau for molding food products

(30) Priorité: 27.07.2001 FR 0110291; 16.10.2001 FR 0113405
(43) Date de publication de la demande: 29.01.2003
(73) Titulaire: ARMOR INOX SA, F-56430 Mauron (FR)
(72) Inventeur: Dreano, Claude, 56430 Mauron (FR)
(74) Mandataire: Maillet, Alain

(56) Documents cités:
- EP-A- 0 292 417
- EP-A- 0 625 325
- WO-A-01/21001
- DE-U- 20 104 984
- FR-A- 1 003 069
- FR-A- 2 658 483
- FR-A- 2 669 004
- FR-A- 2 788 199

## Description

La présente invention concerne un plateau de moulage de produits alimentaires tels que des jambons, un ensemble empilable de plateaux de moulage pour le moulage industriel de produits alimentaires et un procédé de fabrication d'un plateau de moulage selon l'invention.

La cuisson industrielle de certains produits alimentaires tels que des jambons nécessite un moulage. Dans la fabrication du jambon moulé, la viande est introduite dans des moules fermés dans lesquels elle peut être cuite et pressée.

Est bien connu le moulage de tels produits alimentaires au moyen d'ensembles empilables constitués d'une série de plateaux empilés, chaque plateau, appelé plateau multimoule, comprenant une pluralité de moules et, associés en fond à chacun des moules, des couvercles adaptés à la fermeture des moules du plateau inférieur. Un plateau multimoule peut être constitué de moules individuels disposés les uns à côté des autres et/ou les uns à la suite des autres. Il peut être également constitué de goulottes longitudinales de profil en « U » disposées parallèlement côte à côte. Chaque goulotte peut être scindée en plusieurs cellules. Chaque plateau peut également ne comprendre qu'une seule goulotte. De tels ensembles de moulage de produits alimentaires sont décrits par exemple dans les brevets français n° 80 152 12, 87 07 108 ou 90 140 19.

Une demande existe actuellement pour des jambons moulés ayant une forme galbée, c'est-à-dire une forme à section variable, par exemple en forme de mandoline ou de ballon de rugby, afin d'obtenir à la coupe des tranches de tailles différentes.

De tels types de jambons peuvent être obtenus par ceux des ensembles empilables connus à l'heure actuelle qui sont constitués d'une pluralité de moules individuels, comme l'ensemble décrit dans le brevet français n° 80 152 12. Cependant, l'empilage des moules est alors très délicat à exécuter, d'autant plus que les plateaux supports sont interchangeables. La très légère déformation d'un moule ou d'un couvercle peut occasionner un décalage, même très léger, qui peut entraîner le mauvais pressage de toute une couche.

Les ensembles empilables constitués de goulottes longitudinales, comme ceux décrits dans les brevets français n° 87 07 108 ou n° 90 140 19, ont de bonnes caractéristiques mécaniques, notamment en ce qui concerne la résistance à la déformation. Cependant, ils ne peuvent pas, dans leur configuration actuelle, servir pour presser des jambons de forme allongée à section variable.

On connaît également le document FR-A-1 003 069 qui divulgue un plateau de maintien de produits alimentaires comprenant au moins une goulotte longitudinale pouvant être fermée par un couvercle, ladite ou chaque goulotte présentant une section variable de manière à définir au moins une alvéole formant moule pour lesdits produits alimentaires. Ce document ne divulgue pas, en lui-même, un plateau de moulage mais un dispositif de maintien de produits alimentaires. Ce plateau de maintien est utilisé dans le cadre de la cuisson de produits alimentaires solides comme par exemple, des pieds de cochons. Ce plateau de maintien ne peut pas servir à cuire des produits alimentaires fluides avant cuisson. En effet, en position de maintien, les cloisons de la goulotte et les cloisons du couvercle sont distantes les unes des autres, ce qui conduit à un débordement du produit alimentaire fluide hors de la goulotte avant sa solidification lors de la cuisson.

La présente invention a notamment pour objet un plateau de moulage de produits alimentaires permettant d'obtenir des produits pressés de forme allongée à section variable, plateau qui ait de bonnes caractéristiques mécaniques, notamment une résistance importante à la déformation et qui permette un bon raccordement entre les moules et les couvercles correspondants, évitant ainsi le débordement du produit alimentaire hors des moules pendant le pressage et avant sa cuisson.

A cet effet, elle propose un plateau de moulage de produits alimentaires comprenant au moins une goulotte longitudinale pouvant être fermée par un couvercle, ladite ou chaque goulotte présentant une section variable de manière à définir au moins une alvéole formant moule pour lesdits produits alimentaires, ledit plateau de moulage étant caractérisé en ce que ladite ou chaque goulotte comporte, au niveau de chacune de ses rives, un décrochement vers l'extérieur, afin de définir un logement dans lequel ledit couvercle peut venir s'insérer de manière ajustée.

Selon un mode de réalisation, pour définir ladite ou chaque alvéole, ladite ou chaque goulotte présente régulièrement sur sa longueur des zones d'étranglement.

De plus, ladite ou chaque goulotte comporte, au niveau de chacun desdits étranglements, une cloison transversale compartimentant chaque alvéole.

Selon un autre mode de réalisation, pour définir ladite ou chaque alvéole, ladite ou chaque goulotte comporte, d'une part, sur sa longueur des zones d'étranglement de petite dimension et des zones d'étranglement de plus forte dimension et, d'autre part, des parois latérales galbées de manière à réunir lesdites zones d'étranglement et à rendre la section de chaque alvéole variable. Ladite ou chaque goulotte peut comporter, au niveau desdites zones d'étranglement, des cloisons transversales de petite dimension et des cloisons transversales de plus forte dimension définissant pour chaque alvéole un compartiment à section variable.

Selon un autre mode de réalisation, ladite ou chaque goulotte comporte des zones d'étranglement prévues pour définir, d'une part, lesdites alvéoles formant moule pour lesdits produits alimentaires et, d'autre part, des alvéoles de plus petite dimension que les alvéoles. Ladite ou chaque goulotte peut alors comporter, au niveau desdites zones d'étranglement, des cloisons transversales de petite dimension et des cloisons transversales de plus forte dimension définissant pour chaque alvéole un compartiment.

Selon une autre caractéristique de l'invention, ledit décrochement vers l'extérieur s'étend par exemple sensiblement verticalement avec, au niveau de sa partie haute, un rabat vers l'extérieur afin de définir un évasement facilitant le guidage dudit couvercle. Ledit rabat peut être plan et incliné à 45° mais il peut également présenter une section arrondie et se terminer par un plan horizontal longitudinal.

Dans un mode de réalisation préféré, ledit plateau de moulage de produits alimentaires comporte plusieurs goulottes disposées parallèlement côte à côte et des plaques transversales formant entretoises qui sont disposées longitudinalement à intervalle régulier entre lesdites goulottes et sur lesquelles lesdites goulottes sont fixées. Lesdites plaques transversales formant entretoises s'étendent avantageusement latéralement sur une certaine distance au-delà des goulottes intervenant de part et d'autre dudit plateau.

Selon une autre caractéristique de l'invention, un couvercle est fixé sur lesdites plaques transversales formant entretoises en dessous de ladite ou chacune desdites goulottes de manière à ce que, lorsque deux plateaux de moulage sont empilés, un couvercle du plateau supérieur puisse venir se loger dans le décrochement d'une goulotte du plateau inférieur.

Selon une autre caractéristique de l'invention, un couvercle est fixé en dessous de ladite ou chacune desdites goulottes par l'intermédiaire de moyens élastiques.

Selon une autre caractéristique de la présente invention, chaque cloison transversale a son arête supérieure qui est rectiligne et sensiblement au niveau des bords supérieurs des goulottes et ledit couvercle est constitué de plusieurs éléments de couvercle prévus pour venir se loger entre deux cloisons transversales. De plus, chaque élément de couvercle est fixé par l'intermédiaire d'entretoises sous une goulotte d'un autre plateau de manière à pouvoir fermer une alvéole entre deux cloisons transversales.

Selon une variante de réalisation, chaque cloison transversale est pourvue d'échancrures latérales.

Un plateau selon l'invention est par exemple monté sur un cadre-support pourvu de piètements de manière à le rendre gerbable.

La présente invention concerne également un procédé de fabrication d'un plateau de moulage de produits alimentaires tel qu'il vient d'être décrit. Ce procédé consiste essentiellement à conformer ladite ou chaque goulotte par emboutissage d'une tôle plane. De même, chaque couvercle peut être conformé par emboutissage d'une tôle plane. Mais, il peut également être conformé en découpant une goulotte selon un plan horizontal longitudinal et en ne gardant que la partie inférieure. Avantageusement, le plan de découpe d'une goulotte correspond au plan contenant le pli formant le décrochement de ladite goulotte.

L'invention, ses caractéristiques et ses avantages, ressortiront mieux de la description détaillée qui suit d'un exemple de réalisation d'un ensemble empilable de moulage de produits alimentaires selon l'invention, en référence aux Figs. annexées, parmi lesquelles :
Les Figs. 1a et 1b sont respectivement une vue en perspective d'un ensemble empilable constitué de deux plateaux selon l'invention et une vue en côté d'un tel ensemble empilable,
la Fig. 2 est une vue en perspective d'une goulotte d'un plateau pour le moulage de produits alimentaires selon l'invention,
les Figs. 3a et 3b sont respectivement une vue en perspective d'un ensemble empilable constitué de deux plateaux selon un autre mode de réalisation de l'invention et une vue en côté d'un tel ensemble empilable,
la Fig. 4 est une vue en perspective d'une goulotte d'un plateau pour le moulage de produits alimentaires pourvue de cloisons de séparation selon un autre mode de réalisation de l'invention,
les Figs. 5a et 5b sont respectivement des vues en coupe de goulottes sur lesquelles sont montés des couvercles selon deux modes de réalisation, et
la Fig. 6 est une vue en coupe selon un plan transversal d'une goulotte selon un mode de réalisation de l'invention.

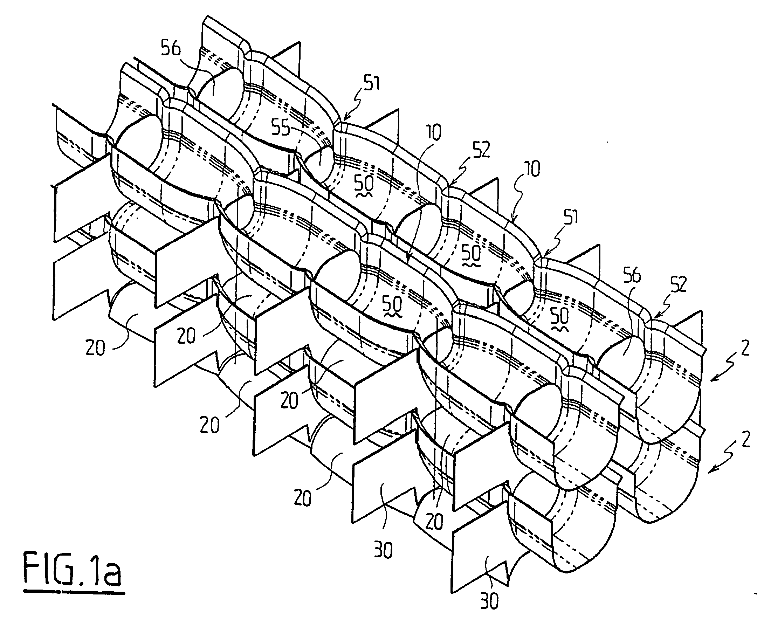

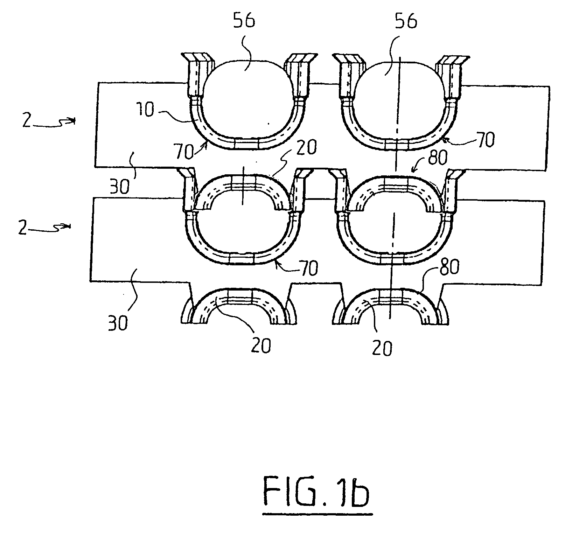

L'ensemble empilable de moulage représenté aux Figs. 1a et 1b est un exemple d'application de la présente invention. Il comprend essentiellement deux plateaux 2 comprenant chacun deux goulottes longitudinales 10 présentant des zones d'étranglement 51 et 52 de manière à former au moins une alvéole 50 (en l'occurrence six) formant moules. Chaque alvéole 50 formant moule a une forme allongée de section variable, par exemple en forme de ballon de rugby ou en mandoline.

Dans l'exemple de réalisation représenté aux Figs. 1a et 1b, des cloisons de séparation 55 et 56 sont rapportées et respectivement fixées au niveau de chaque zone d'étranglement 51 et 52 de manière à compartimenter lesdites goulottes 10 en compartiments 50. A la différence des moules individuels mis bout à bout de l'état de la technique, cette disposition permet d'avoir une structure monobloc en goulotte présentant de bonnes caractéristiques mécaniques.

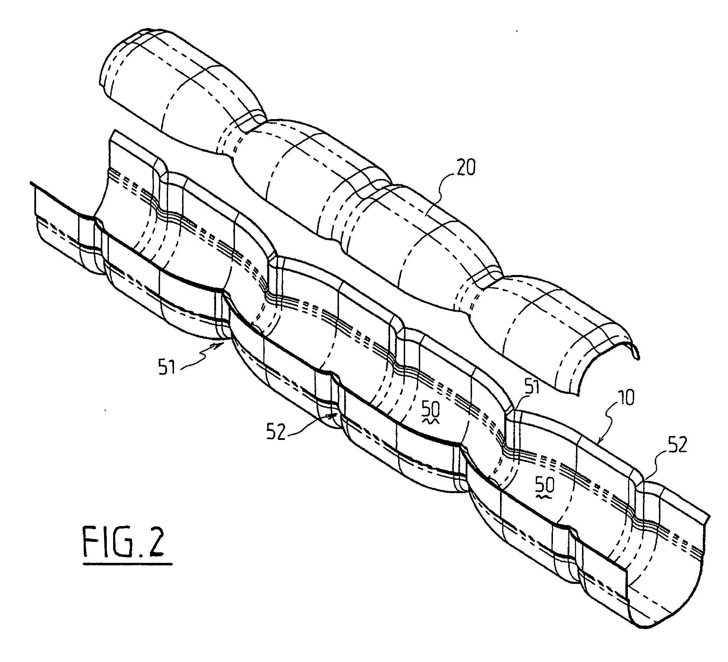

Dans d'autres modes de réalisation, ces cloisons de séparation 55 et 56 peuvent s'avérer ne pas être nécessaires si bien qu'elles en sont absentes. C'est le cas de la goulotte 10 qui est représentée à la Fig. 2.

Toujours dans le mode de réalisation qui est représenté aux Figs. 1a et 1b, les étranglements 51 sont de petite dimension, alors que les étranglements 52 sont de plus forte dimension. On notera que dans ce cas, les parois latérales de chaque goulotte 10, en reliant deux à deux les étranglements 51 et 52, présentent une forme galbée à section variable.

Comme cela est visible sur la Fig. 2, chaque goulotte 10 est destinée à être fermée par un couvercle 20 qui est de ce fait de forme complémentaire à celle de la goulotte 10.

Plus particulièrement, dans l'exemple de réalisation d'un plateau qui est représenté aux Figs. 1a et 1b, un couvercle 20 s'étend au-dessous de chacune des goulottes 10. Dans l'exemple représenté, chaque couvercle 20 est ainsi fixé aux goulottes 10 par l'intermédiaire d'entretoises 30 qui interviennent entre les goulottes 10 et les couvercles 20 correspondants. On notera cependant que le montage des couvercles 20 sur les goulottes 10 peut également être un montage avec des moyens élastiques de rappel du type de ceux qui sont notamment décrits dans le brevet français n° 98 07 206.

Les entretoises 30 qui sont représentées aux Figs. 1a et 1b sont disposées à intervalle régulier sur la longueur du plateau 2. Elles interviennent plus précisément au niveau des zones d'étranglement 51 et 52 entre les alvéoles 50 formant moules. Dans le mode de réalisation représenté, ces entretoises 30 se trouvent dans le même plan que les cloisons de séparation 55 ou 56 correspondantes.

Plus précisément, sur la partie supérieure de la plaque 30, sont ménagées des encoches 70 formant logements adaptés à recevoir chacun une goulotte 10 au niveau d'une zone d'étranglement 51, 52 entre deux alvéoles 50. La forme des encoches 70 dépend donc du fait que la plaque 30 doit être placée au niveau d'une grande zone d'étranglement 51 ou d'une petite zone d'étranglement 52 (dans le cas où celles-ci ne sont pas de même dimension). Sur la partie inférieure de la plaque 30 sont ménagées des encoches 80 formant logements adaptés à chevaucher chacun un couvercle 20 également au niveau d'une zone d'étranglement 51, 52 entre deux alvéoles 50. Là encore, la forme des encoches 80 dépend du fait que la plaque 30 doit être placée au niveau d'une grande zone d'étranglement 51 ou d'une petite zone d'étranglement 52 des alvéoles 50 (dans le cas où celles-ci ne sont pas de même dimension).

On voit sur la Fig. 1 que les entretoises 30 s'étendent latéralement sur une certaine distance au-delà des goulottes 10 intervenant de part et d'autre dudit plateau.

La Fig. 2 montre une goulotte 10 dans un premier mode de réalisation. Cette goulotte 10 est à section variable avec une ondulation de période correspondant à la longueur des alvéoles 50 ou à un multiple de cette longueur. Dans le présent exemple de réalisation, l'ondulation décrite par la section de la goulotte 10 est de période égale à deux longueurs de compartiments 50. Sur cette période, la forme de la goulotte 10 est galbée avec un galbe en forme sensiblement d'accolade, de sorte qu'elle définit une série de deux alvéoles 50 ouvertes vers le haut, s'étendant longitudinalement, et de section transversale allant s'évasant à partir d'une zone d'étranglement 51, puis se rétrécissant vers une autre zone d'étranglement 52 de taille supérieure à la zone d'étranglement 51. La section de la goulotte s'évase ensuite à nouveau, pour former l'alvéole 50 voisine dont la zone d'étranglement 52 constitue également sa zone d'étranglement de plus grande taille, puis se rétrécit jusqu'à la zone d'étranglement de plus petite taille et ainsi de suite. Chaque alvéole 50 a donc un étranglement 51 de petite taille et un étranglement de grande taille 52 entre lesquels elle a une forme galbée vers l'extérieur sensiblement en forme de ballon de rugby.

On notera que dans un autre mode de réalisation non représenté, les formes des zones d'étranglement 51 et 52 définissant les alvéoles 50 sont identiques.

A la Fig. 1a, on peut voir que la petite zone d'étranglement 51 de chaque alvéole 50 est fermée par une petite cloison transversale 55 et la grande zone d'étranglement 52 de cette alvéole 50 est fermée par une grande cloison transversale 56. Chacune de ces cloisons 55, 56 a la forme de la section de la goulotte 10 dans la zone correspondante et est prolongée vers le haut d'une forme correspondant à la section du couvercle 20 dans cette zone.

Par contre, dans le mode de réalisation représenté à la Fig. 2, ces cloisons de séparation 55 et 56 sont absentes.

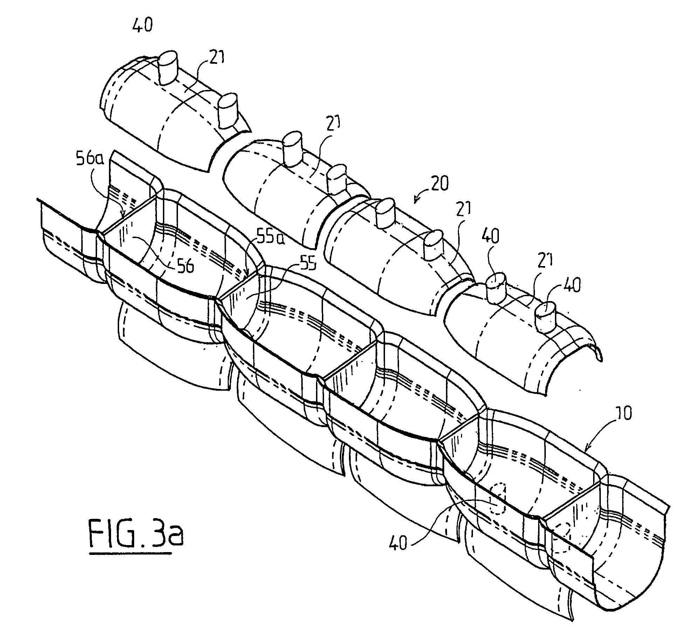

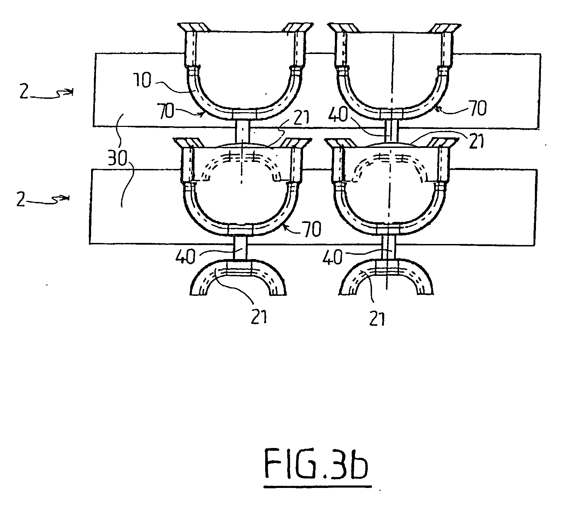

Le mode de réalisation qui est représenté aux Figs. 3a et 3b diffère de celui qui est représenté aux Figs. 1a et 1b en ce que les cloisons transversales 55 et 56 ont leurs arêtes supérieures 55a et 556a qui sont rectilignes et sensiblement au niveau des bords supérieurs des goulottes 10. Par ailleurs, les couvercles 20 ne sont plus constitués d'une seule pièce, mais d'un ensemble d'éléments de couvercle 21 qui, mis bout à bout, ont la même forme que le couvercle 20 représenté aux Figs. 1a et 1b. Chaque élément de couvercle 21 est fixé, au moyen d'entretoises 40, à la partie inférieure de chaque goulotte 20 et, ce, de manière à ce qu'il puisse venir se loger entre deux cloisons 55 et 56 d'une goulotte inférieure et ainsi fermer l'alvéole 50 comprise entre ces deux cloisons 55 et 56. On notera que, dans ce mode de réalisation, lorsqu'un couvercle 20 est mis en place, les cloisons 55 et 56 se trouvent entre deux éléments de couvercle 21.

L'utilisation de ce mode de réalisation est particulièrement adaptée lorsque les produits alimentaires qui sont cuits dans chacune des alvéoles d'une goulotte le sont enfermés dans un sac de matière plastique. On a en effet pu constater que les sacs se plissent facilement à l'intérieur de l'alvéole 50 correspondante et n'ont pas tendance à passer au-dessus des cloisons transversales 55 et 56 formant ladite alvéole 50 où ils risqueraient d'être tranchés entre l'arête supérieure 55a ou 56a de ces cloisons et le couvercle 20.

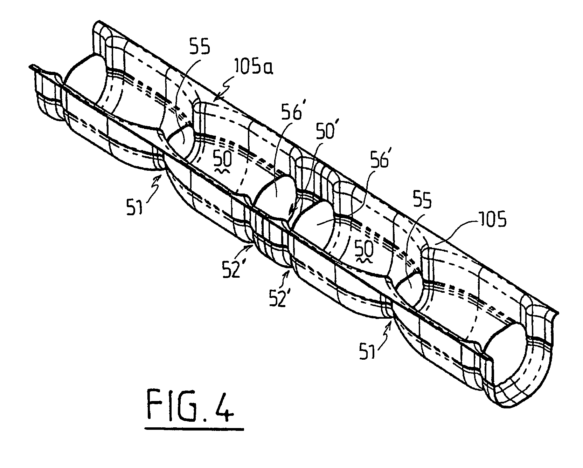

La goulotte 10 qui est représentée à la Fig. 4 comporte alternativement une zone d'étranglement 51 puis deux zones d'étranglement 52' relativement moins distantes entre elles qu'une zone d'étranglement 51 et une zone d'étranglement 52'. Il résulte de cette disposition qu'une zone d'étranglement 51 et une zone d'étranglement 52' définissent entre elles une alvéole 50 de relativement grande dimension alors que deux zones d'étranglement 52' définissent entre elles une alvéole 50' de plus petite dimension. L'utilisation d'une telle goulotte peut être la suivante : dans une grande alvéole 50, sont logés des produits alimentaires enfermés dans des poches présentant une poche annexe qui, elle, est logée dans une petite alvéole 50' voisine. Comme on peut le constater à la Fig. 4 deux poches annexes peuvent être logées dans une même alvéole 50'.

Dans le mode de réalisation qui est représenté à la Fig. 4, des cloisons de séparation 55, 56' sont prévues pour compartimenter les alvéoles 50 et 50'. On notera cependant que les cloisons 56' pourraient être omises. Généralement, seules les alvéoles 50' ont besoin d'être compartimentées.

Pour conformer une goulotte 10 selon l'invention, on utilise une tôle plane que l'on emboutit de manière à ce qu'elle présente une section variable afin de créer l'ondulation voulue et les alvéoles 50. La conformation des goulottes 10 par emboutissage présente l'avantage d'entraîner un écrouissage du métal, ce qui augmente ses caractéristiques mécaniques par rapport aux techniques de roulage ou pliage utilisées dans l'état de la technique.

De plus, l'opération d'emboutissage est plus facile à réaliser sur des goulottes que sur des moules individuels. En effet, lorsque l'on réalise un moule individuel en forme allongée à section variable par emboutissage, la pression exercée sur les extrémités des moules individuels donne lieu à une dépouille aux deux extrémités. Dans le cas des moules suivant la présente invention, on obtient des produits pressés à entames franches, ce qui évite, notamment, les pertes au tranchage. Ceci est vrai notamment lorsqu'on utilise des cloisons de séparation 51 et 52.

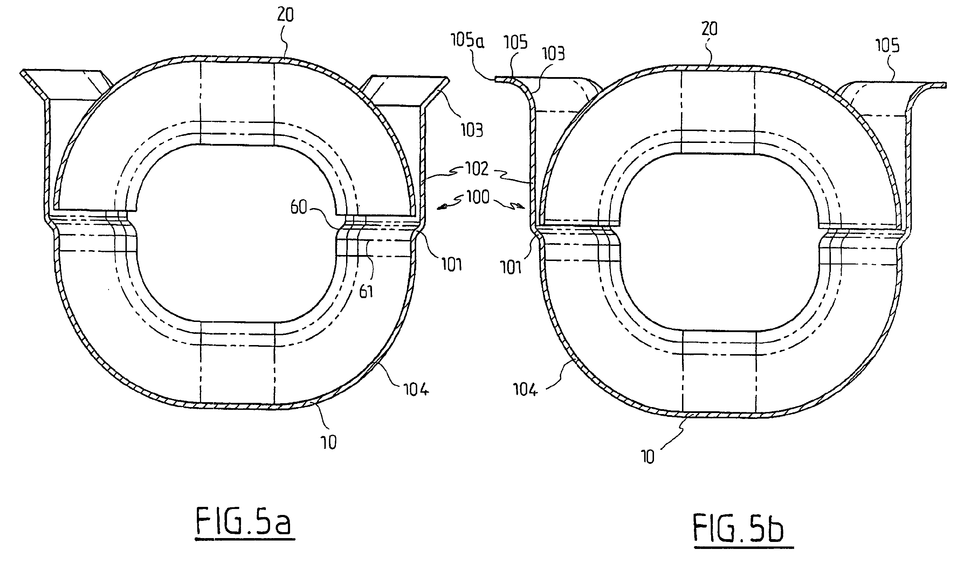

Selon l'invention, comme cela est visible aux Figs. 5a et 5b, la goulotte 10 comporte, au niveau de chacune de ses rives, un décrochement 100 vers l'extérieur, afin de définir un logement dans lequel le couvercle peut venir s'insérer aisément de manière ajustée.

Le décrochement vers l'extérieur est avantageusement réalisé sur la goulotte 10 ouverte aux extrémités. Lors de l'emboutissage de la tôle, le décrochement 100 est déformé de sorte qu'il suit l'ondulation du reste de la goulotte 10. Ce décrochement 100 galbé-embouti assure le guidage précis des couvercles 20 lors de leur introduction dans la goulotte 10. En outre, il permet de raidir efficacement les parois de la goulotte 10. Il limite ainsi les déformations des moules pendant les phases de pressage.

Dans le présent exemple de réalisation, en référence notamment aux Figs. 5a et 5b, chacun des décrochements 100 présent de part et d'autre de la goulotte 10 est constitué par une paroi verticale 102 qui vient prolonger, avec un décalage vers l'extérieur, la paroi latérale 104 correspondant de la goulotte 10. La paroi 102 est raccordée au bord 104 correspondant par un coude 101, par exemple constitué d'un pli à 45° se raccordant horizontalement sur toute la longueur de la goulotte 10.

Au niveau de sa partie haute, la paroi verticale 102 présente un rabat 103 qui est tourné vers l'extérieur avec une certaine courbure afin de définir une partie supérieure de goulotte évasée pour accueillir le couvercle 20.

Dans l'exemple de réalisation représenté à la Fig. 5a, la partie supérieure 103 est formée par un pli à 45°.

Dans l'exemple de réalisation qui est représenté à la Fig. 5b, ce rabat 103 est formé en arc de cercle, par exemple d'angle égal à 90°, et se termine par un plan 105 horizontal longitudinal (comme cela est également visible à la Fig. 2). On peut constater que ce plan 105 est limité extérieurement par des bords rectilignes 105a qui, dans le procédé de fabrication, sont obtenus par découpage laser. Ce rabat 103 particulier présente l'avantage d'augmenter la rigidité de la goulotte 10.

Lors de l'emboutissage de la tôle, le décrochement 100 est déformé de sorte qu'il suit l'ondulation du reste de la goulotte 10, ainsi qu'on le voit sur les Figs. 5a et 5b. Ainsi, la ligne d'emboutissage 60 intervenant au niveau de la séparation entre deux alvéoles 50 est prolongée sur la paroi 102 par une ligne d'emboutissage 61. Comme on le voit sur les Figs. 5a et 5b, l'emboutissage est avantageusement réalisé en dessous de la zone évasée définie par les parties supérieures 103 des décrochements 100 afin de faciliter l'introduction du couvercle 20 dans la goulotte 10.

Selon la présente invention, le couvercle 20 est obtenu à partir d'une tôle emboutie afin de créer une ondulation correspondant à celle de la goulotte 10. Dans le présent exemple, le couvercle 20 correspond à la partie inférieure de la goulotte 10 retournée. Plus précisément, ce couvercle 20 est obtenu en découpant, au niveau de la ligne 61 ou au-dessous du décrochement 100, une goulotte 10 et en ne gardant que la partie inférieure de celle-ci.

Lorsque deux plateaux 2 sont empilés l'un sur l'autre, les couvercles 20 du plateau 2 supérieur viennent s'insérer dans les goulottes 10 du plateau 2 inférieur. On voit sur les Figs. 5a et 5b comment se fait cette insertion. Grâce à la partie évasée 103, le couvercle 20 est guidé lors de son introduction dans le logement que constitue le décrochement 100, facilitant ainsi cette introduction dans la goulotte 10 correspondante. Ensuite, le bord du couvercle 20 vient coulisser le long des décrochements 100 de la goulotte 10. Le couvercle est ainsi parfaitement guidé pour venir recouvrir la partie inférieure de la goulotte en dessous du coude 101.

Comme on peut le constater aux Figs. 1a et 1b, les goulottes s'étendent sur une certaine distance au-delà des alvéoles 50. En effet, aux Figs. 1a et 1b, chaque goulotte 10 comporte quatre alvéoles 50 et est prolongée, au-delà par des zones 57. L'avantage d'une telle disposition résulte dans le fait que la découpe des extrémités de chaque goulotte 10 est faite sur une partie la moins écrouie de celle-ci, ce qui rend plus nette cette découpe.

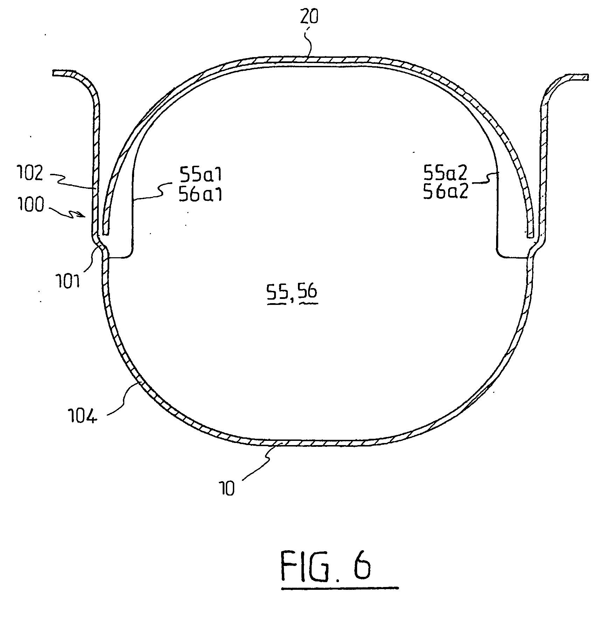

A la Fig. 6, on a représenté, dans un mode de réalisation particulier, la coupe d'une goulotte 10 selon un plan transversal contenant une zone d'étranglement 51 ou 52. Sur cette Fig. 6, on constate la présence d'une cloison transversale 55 (ou 56) et d'un couvercle 20 semblable à celui qui est déjà représenté à la Fig. 2. Selon le mode de réalisation qui est représenté à cette Fig. 6, chaque cloison transversale 55 (ou 56) présente latéralement des échancrures 55a1 et 55a2 (ou 56a1 et 56a2) laissant un espace vide, dans la partie supérieure latérale de chaque cloison 55 (ou 56), entre la cloison 55 (ou 56) et la goulotte 10. Lors de la cuisson de produit alimentaire dans des sacs de cuisson, lorsque le couvercle 20 est mis en place, des rabats des sacs viennent se loger dans cet espace vide leur évitant ainsi d'être tranchés entre le couvercle 20 et l'arête supérieure de la cloison 55 (ou 56), notamment à l'intersection avec la goulotte 10.

Un plateau 2 selon la présente invention peut être monté sur des cadres supports pourvus de piètements, par exemple du type de ceux qui sont décrits dans le brevet français n° 87 07 108. Il consiste alors en un ensemble gerbable qui est utilisé en tant que tel pour le moulage industriel de produits alimentaires, tels que notamment des jambons.

## Revendications

1. Plateau de moulage de produits alimentaires comprenant au moins une goulotte (10) longitudinale pouvant être fermée par un couvercle (20), ladite ou chaque goulotte (10) présente une section variable de manière à définir au moins une alvéole (50) formant moule pour lesdits produits alimentaires, ledit plateau de moulage étant **caractérisé en ce que** ladite ou chaque goulotte (10) comporte, au niveau de chacun de ses rives, un décrochement (100) vers l'extérieur, afin de définir un logement dans lequel ledit couvercle (20) peut venir s'insérer de manière ajustée.

2. Plateau de moulage de produits alimentaires selon la revendication 1, **caractérisé en ce que**, pour définir ladite ou chaque alvéole (50), ladite ou chaque goulotte (10) présente régulièrement sur sa longueur des zones d'étranglement (51, 52).

3. Plateau de moulage de produits alimentaires selon la revendication 2, **caractérisé en ce que** ladite ou chaque goulotte (10) comporte, au niveau de chacun desdits étranglements, une cloison (55, 56) transversale compartimentant chaque alvéole (50).

4. Plateau de moulage de produits alimentaires selon la revendication 2, **caractérisé en ce que**, pour définir ladite ou chaque alvéole (50), ladite ou chaque goulotte (10) comporte, d'une part, sur sa longueur des zones d'étranglement (51) de petite dimension et des zones d'étranglement (52) de plus forte dimension et, d'autre part, des parois latérales (104) galbées de manière à réunir lesdites zones d'étranglement (51 et 52) et à rendre la section de chaque alvéole variable.

5. Plateau de moulage de produits alimentaires selon la revendication 4, **caractérisé en ce que** ladite ou chaque goulotte (10) comporte, au niveau desdites zones d'étranglement, des cloisons transversales de petite dimension (55) et des cloisons transversales de plus forte dimension (56) définissant pour chaque alvéole (50) un compartiment à section variable.

6. Plateau de moulage de produits alimentaires selon une des revendications précédentes, **caractérisé en ce que** ladite ou chaque goulotte (10) comporte des zones d'étranglement (51, 52') prévues pour définir, d'une part, lesdites alvéoles (50) formant moule pour lesdits produits alimentaires et, d'autre part, des alvéoles (50') de plus petite dimension que les alvéoles (50).

7. Plateau de moulage de produits alimentaires selon la revendication 6, **caractérisé en ce que** ladite ou chaque goulotte (10) comporte, au niveau desdites zones d'étranglement (51, 52'), des cloisons transversales de petite dimension (55) et des cloisons transversales de plus forte dimension (56') définissant pour chaque alvéole (50, 50') un compartiment.

8. Plateau de moulage de produits alimentaires selon une des revendications précédentes, **caractérisé en ce que** ledit décrochement vers l'extérieur (100) s'étend sensiblement verticalement avec, au niveau de sa partie haute (103), un rabat vers l'extérieur afin de définir un évasement facilitant le guidage dudit couvercle (20).

9. Plateau de moulage de produits alimentaires selon la revendication 8, **caractérisé en ce que** ledit rabat est plan et incliné à 45°.

10. Plateau de moulage de produits alimentaires selon la revendication 9, **caractérisé en ce que** ledit rabat présente une section arrondie.

11. Plateau de moulage de produits alimentaires selon l'une quelconque des revendications précédentes, **caractérisé en ce qu'**il comprend plusieurs goulottes (10) disposées parallèlement côte à côte et des plaques transversales (30) formant entretoises qui sont disposées longitudinalement à intervalle régulier entre lesdites goulottes (10) et sur lesquelles lesdites goulottes sont fixées.

12. Plateau de moulage de produits alimentaires selon la revendication 11, **caractérisé en ce que** lesdites plaques transversales (30) formant entretoises s'étendent latéralement sur une certaine distance au-delà des goulottes (10) intervenant de part et d'autre dudit plateau (2).

13. Plateau de moulage de produits alimentaires selon la revendication 11 ou 12, **caractérisé en ce que** ledit couvercle (20) est fixé sur lesdites plaques transversales (30) formant entretoises en dessous de ladite ou chacune desdites goulottes (10) de manière à ce que, lorsque deux plateaux de moulage sont empilés, un couvercle (20) du plateau supérieur puisse venir se loger dans le décrochement (100) d'une goulotte (10) du plateau inférieur.

14. Plateau de moulage de produits alimentaires selon une des revendications précédentes, **caractérisé en ce que** chaque cloison transversale (55, 56) a son arête supérieure (55a, 56a) qui est rectiligne et sensiblement au niveau des bords supérieurs des goulottes (10) et **en ce que** ledit couvercle (20) est constitué de plusieurs éléments de couvercle (21) prévus pour venir se loger entre deux cloisons transversales (55, 56).

15. Plateau de moulage de produits alimentaires selon la revendication 14, **caractérisé en ce que** chaque élément de couvercle (21) est fixé par l'intermédiaire d'entretoises (40) sous une goulotte (10) d'un autre plateau de manière à pouvoir fermer une alvéole (50) entre deux cloisons transversales (55, 56).

16. Plateau de moulage de produits alimentaires selon une des revendications 1 à 13, **caractérisé en ce que** les cloisons transversales (55, 56) sont pourvues d'échancrures latérales (55a1 et 55a2; 56a1 et 56a2).

17. Plateau de moulage de produits alimentaires selon une des revendications précédentes, **caractérisé en ce que** ledit plateau est monté sur un cadre-support pourvu de piètements de manière à le rendre gerbable.

18. Procédé de fabrication d'un plateau de moulage de produits alimentaires selon une des revendications 1 à 17, **caractérisé en ce qu'**il consiste à conformer ladite ou chaque goulotte (10) par emboutissage d'une tôle plane.

19. Procédé de fabrication d'un plateau de moulage de produits alimentaires selon la revendication 13, **caractérisé en ce que** chaque couvercle (20) est conformé par emboutissage d'une tôle plane.

20. Procédé de fabrication d'un plateau de moulage de produits alimentaires selon la revendication 13, **caractérisé en ce que** chaque couvercle (20) est conformé en découpant une goulotte (10) selon un plan horizontal longitudinal et en ne gardant que la partie inférieure.

21. Procédé de fabrication d'un plateau selon la revendication 20, **caractérisé en ce que** le plan de découpe d'une goulotte (10) correspond au plan contenant le pli formant le décrochement (100) de ladite goulotte (10).

## Claims

1. Tray for moulding of food products comprising at least one longitudinal channel (10) which can be closed by a cover (20), said or each channel (10) exhibiting a variable section so as to define at least one cavity (50) forming a mould for said food products, said tray for moulding being **characterised in that** said or each channel (10) comprises an outward step (100) in each of its sides in order to define a housing in which said cover (20) can be inserted with a tight fit.

2. Tray for moulding of food products according to claim 1, **characterised in that** in order to define said or each cavity (50), said or each channel (10) exhibits narrowed zones (51, 52) at regular intervals over its length.

3. Tray for moulding of food products according to claim 2, **characterised in that** in each of said narrowed zones said or each channel (10) comprises a transverse dividing wall (55, 56) compartmentalising each cavity (50) .

4. Tray for moulding of food products according to claim 2, **characterised in that** in order to define said or each cavity (50), said or each channel (10) comprises over its length firstly narrowed zones (51) of small size and narrowed zones (52) of larger size and secondly side walls (104) which are curved so as to join said narrowed zones (51 and 52) and make the section of each cavity variable.

5. Tray for moulding of food products according to claim 4, **characterised in that** in said narrowed zones said or each channel (10) comprises transverse dividing walls of small size (55) and transverse dividing walls of larger size (56) defining a compartment of variable section for each cavity (50).

6. Tray for moulding of food products according to one of the preceding claims, **characterised in that** said or each channel (10) comprises narrowed zones (51, 52') designed to define firstly said cavities (50) forming a mould for said food products and secondly cavities (50') of smaller size than the cavities (50).

7. Tray for moulding of food products according to claim 6, **characterised in that** in said narrowed zones (51, 52') said or each channel (10) comprises transverse dividing walls of small size (55) and transverse dividing walls of larger size (56') defining a compartment for each cavity (50, 50').

8. Tray for moulding of food products according to one of the preceding claims, **characterised in that** said outward step (100) extends essentially vertically with an outward lip in its top portion (103) to define a flared portion facilitating guidance of said cover (20).

9. Tray for moulding of food products according to claim 8, **characterised in that** said lip is flat and inclined at 45°.

10. Tray for moulding of food products according to claim 9, **characterised in that** said lip has a rounded section.

11. Tray for moulding of food products according to any one of the preceding claims, **characterised in that** it comprises a plurality of channels (10) disposed parallel side by side and transverse plates (30) forming braces which are disposed longitudinally at regular intervals between said channels (10) and on which said channels are fixed.

12. Tray for moulding of food products according to claim 11, **characterised in that** said transverse plates (30) forming braces extend laterally over a certain distance beyond the channels (10) intervening on either side of said tray (2).

13. Tray for moulding of food products according to claim 11 or 12, **characterised in that** said cover (20) is fixed on said transverse plates (30) forming braces below said or each of said channels (10) so that when two trays for moulding are stacked together, a cover (20) of the upper tray can be accommodated in the step (100) of a channel (10) of the lower tray.

14. Tray for moulding of food products according to one of the preceding claims, **characterised in that** each transverse dividing wall (55, 56) has an upper edge (55a, 56a) which is straight and substantially level with the upper edges of the channels (10) and **in that** said cover (20) is constituted by a plurality of cover elements (21) designed to be accommodated between two transverse dividing walls (55, 56).

15. Tray for moulding of food products according to claim 14, **characterised in that** each cover element (21) is fixed through the intermediary of braces (40) under a channel (10) of another tray so as to be able to close a cavity (50) between two transverse dividing walls (55, 56).

16. Tray for moulding of food products according to one of claims 1 to 13, **characterised in that** the transverse dividing walls (55, 56) are provided with side cut-outs (55a1 and 55a2; 56a1 and 56a2).

17. Tray for moulding of food products according to one of the preceding claims, **characterised in that** said tray is mounted on a supporting frame provided with seats so as to make it stackable.

18. Method for manufacturing a tray for moulding of food products according to one of claims 1 to 17, **characterised in that** it consists of shaping said or each channel (10) by pressing a flat sheet.

19. Method for manufacturing a tray for moulding of food products according to claim 13, **characterised in that** each cover (20) is shaped by pressing a flat sheet.

20. Method for manufacturing a tray for moulding of food products according to claim 13, **characterised in that** each cover (20) is shaped by cutting a channel (10) in a longitudinal horizontal plane and only keeping the lower portion.

21. Method for manufacturing a tray according to claim 20, **characterised in that** the plane of cutting of a channel (10) corresponds to the plane containing the fold forming the step (100) in said channel (10).

## Patentansprüche

1. Plateau zur Formgebung von Nahrungsprodukten mit wenigstens einer sich in Längsrichtung erstreckenden Hohlkehle (10), die mit einem Deckel (20) verschlossen werden kann, wobei diese oder jede Hohlkehle (10) einen variablen Abschnitt bildet, so dass wenigstens eine Wabe (50) definiert wird, welche die Form für die Nahrungsprodukte bildet, wobei das Plateau zur Formgebung **dadurch gekennzeichnet ist, dass** diese oder jede Hohlkehle (10) auf dem Niveau jeder ihrer Randstreifen eine Abweichung (100) nach außen umfasst, um so eine Aufnahme zu schaffen, in die sich der Deckel (20) passgenau einsetzen kann.

2. Plateau zur Formgebung von Nahrungsprodukten nach Anspruch 1, **dadurch gekennzeichnet, dass** zur Bildung der oder jeder Wabe (50) die oder jede Hohlkehle (10) gleichmäßig auf ihrer Länge verteilt eingeschnürte Bereiche (51, 52) umfasst.

3. Plateau zur Formgebung von Nahrungsprodukten nach Anspruch 2, **dadurch gekennzeichnet, dass** die oder jede Hohlkehle (10) auf dem Niveau jeder der Einschnürungen eine transversale Trennwand (55, 56) umfasst, welche jede Wabe (50) abteilt.

4. Plateau zur Formgebung von Nahrungsprodukten nach Anspruch 2, **dadurch gekennzeichnet, dass** zur Bildung der oder jeder Wabe (50) die oder jede Hohlkehle (10) einerseits über ihre Länge verteilt eingeschnürte Bereiche (51) von geringer Dimension und eingeschnürte Bereiche (52) von größerer Dimension und andererseits Seitenwände (104) umfasst, die so geformt sind, dass sie die eingeschnürten Bereiche (51 und 52) wieder vereinigen und den Abschnitt jeder Wabe variabel machen.

5. Plateau zur Formgebung von Nahrungsprodukten nach Anspruch 4, **dadurch gekennzeichnet, dass** die oder jede Hohlkehle (10) auf dem Niveau der eingeschnürten Bereiche transversale Trennwände von geringer Dimension (55) und transversale Trennwände von größerer Dimension (56) umfasst, welche für jede Wabe (50) einen abgeteilten Behälter mit variablem Abschnitt definieren.

6. Plateau zur Formgebung von Nahrungsprodukten nach einem der vorhergehenden Ansprüche, **dadurch gekennzeichnet, dass** die oder jede Hohlkehle (10) eingeschnürte Bereiche (51, 52') umfasst, die dazu bestimmt sind, einerseits die Waben (50), die die Form für die Nahrungsprodukte bilden und andererseits Waben (50') von geringerer Dimension als die Waben (50) zu definieren.

7. Plateau zur Formgebung von Nahrungsprodukten nach Anspruch 6, **dadurch gekennzeichnet, dass** die oder jede Hohlkehle (10) auf dem Niveau der eingeschnürten Bereiche (51, 52') transversale Trennwände von geringer Dimension (55) und transversale Trennwände von größerer Dimension (56') umfasst, welche für jede Wabe (50, 50') einen abgeteilten Behälter definieren.

8. Plateau zur Formgebung von Nahrungsprodukten nach einem der vorhergehenden Ansprüche, **dadurch gekennzeichnet, dass** sich die Abweichung nach außen (100) genau vertikal erstreckt mit einer Auskragung nach außen auf dem Niveau ihres oberen Bereichs (103), um so eine trichterförmige Erweiterung zu definieren, die die Führung des Deckels (20) erleichtert.

9. Plateau zur Formgebung von Nahrungsprodukten nach Anspruch 8, **dadurch gekennzeichnet, dass** die Auskragung eben und um 45° geneigt ist.

10. Plateau zur Formgebung von Nahrungsprodukten nach Anspruch 9, **dadurch gekennzeichnet, dass** die Auskragung einen abgerundeten Abschnitt darstellt.

11. Plateau zur Formgebung von Nahrungsprodukten nach einem der vorhergehenden Ansprüche, **dadurch gekennzeichnet, dass** es mehrere Hohlkehlen (10) besitzt, die parallel Seite an Seite angeordnet sind und transversale Platten (30) umfassen, welche Abstandsstege bilden, die in regelmäßigem Abstand in Längsrichtung zwischen den Hohlkehlen (10) angeordnet sind und auf denen die Hohlkehlen befestigt sind.

12. Plateau zur Formgebung von Nahrungsprodukten nach Anspruch 11, **dadurch gekennzeichnet, dass** sich die transversalen Platten (30), welche Abstandsstege bilden, seitlich über einen gewissen Abstand zu den Hohlkehlen (10) erstrecken und einerseits und andererseits mit dem Plateau (2) intervenieren.

13. Plateau zur Formgebung von Nahrungsprodukten nach Anspruch 11 oder 12, **dadurch gekennzeichnet, dass** der Deckel (20) an den transversalen Platten (30), welche Abstandsstege unter der oder jeder der Hohlkehlen (10) bilden, befestigt ist, so dass, wenn zwei Plateaus zur Formgebung aufeinandergeschichtet werden, ein Deckel (20) des oberen Plateaus sich in die Abweichung (100) einer Hohlkehle (10) des unteren Plateaus hineinsetzen kann.

14. Plateau zur Formgebung von Nahrungsprodukten nach einem der vorhergehenden Ansprüche, **dadurch gekennzeichnet, dass** jede transversale Trennwand (55, 56) eine obere Kante (55a, 56a) besitzt, welche geradlinig ist und sich genau auf dem Niveau der oberen Ränder der Hohlkehlen (10) befindet, und dass der Deckel (20) aus mehreren Deckelelementen (21) besteht, die dazu bestimmt sind, sich zwischen zwei transversale Trennwände (55, 56) einzusetzen.

15. Plateau zur Formgebung von Nahrungsprodukten nach Anspruch 14, **dadurch gekennzeichnet, dass** jedes Deckelelement (21) mittels Abstandsstegen (40) unter einer Hohlkehle (10) eines anderen Plateaus befestigt ist, so dass es eine Wabe (50) zwischen zwei transversalen Trennwänden (55, 56) verschließen kann.

16. Plateau zur Formgebung von Nahrungsprodukten nach Anspruch 1 bis 13, **dadurch gekennzeichnet, dass** die transversalen Trennwände (55, 56) mit seitlichen bogenförmigen Abschnitten (55a1 und 55a2; 56a1 und 56a2) versehen sind.

17. Plateau zur Formgebung von Nahrungsprodukten nach einem der vorhergehenden Ansprüche, **dadurch gekennzeichnet, dass** das Plateau auf einem Stützrahmen mit Füßen montiert ist, um es stapelbar zu machen.

18. Verfahren zur Herstellung eines Plateaus zur Formgebung von Nahrungsprodukten nach einem der Ansprüche 1 bis 17, **dadurch gekennzeichnet, dass** es darin besteht, die oder jede Hohlkehle (10) durch Tiefziehen eines ebenen Bleches zu bilden.

19. Verfahren zur Herstellung eines Plateaus zur Formgebung von Nahrungsprodukten nach Anspruch 13, **dadurch gekennzeichnet, dass** jeder Deckel (20) durch Tiefziehen eines ebenen Bleches gebildet wird.

20. Verfahren zur Herstellung eines Plateaus zur Formgebung von Nahrungsprodukten nach Anspruch 13, **dadurch gekennzeichnet, dass** jeder Deckel (20) durch Abschneiden einer Hohlkehle (10) gemäß einer sich in Längsrichtung erstreckenden horizontalen Ebene gestaltet wird, wobei nur der untere Teil erhalten bleibt.

21. Verfahren zur Herstellung eines Plateaus nach Anspruch 20, **dadurch gekennzeichnet, dass** die Abschneid-Ebene einer Hohlkehle (10) der Ebene entspricht, welche den Knick umfasst, der die Abweichung (100) der Hohlkehle (10) bildet.
